# DEMANDE DE BREVET EUROPEEN

(11) **EP 0 688 123 A1**
(43) Date de publication de la demande: **20.12.1995**
(21) Numéro de dépôt: 95201546.9
(22) Date de dépôt: 12.06.1995
(51) Int. Cl.: H04L 29/06

(54) **Système de transmission de données à compression de données**

(30) Priorité: 15.06.1994 FR 9407306
(71) Demandeur: T.R.T. TELECOMMUNICATIONS RADIOELECTRIQUES ET TELEPHONIQUES, 75013 Paris (FR); Philips Electronics N.V., 5621 BA Eindhoven (NL)
(72) Inventeur: Guy, Jean-Yves, F-75008 Paris (FR)
(74) Mandataire: Chaffraix, Jean

(57) **Abrégé**

L'émetteur (10) et le récepteur (20) d'un tel système de transmission, qui sont synchronisés, comportent des moyens (101, 102, 103, 104 et 105; 201, 202, 203, 204 et 205) pour commuter, lorsque la compression n'est plus efficace, d'un premier mode de fonctionnement à compression de données vers un second mode de fonctionnement, appelé mode débrayé et selon lequel les données sont transmises ou reçues directement sans compression ou décompression, pour la transmission et respectivement la réception d'une quantité de données prédéterminée.

Applications: notamment aux réseaux de transmission à taxation par paquets.

## Description

La présente invention concerne un système de transmission de données comprenant au moins un émetteur et un récepteur qui comportent chacun des moyens pour commuter entre un premier mode de fonctionnement selon lequel les données transmises ou reçues sont codées ou décodées de façon à les comprimer ou à les décomprimer, et un second mode de fonctionnement selon lequel les données sont transmises ou reçues directement sans codage ou décodage.

Elle a d'importantes applications notamment dans le domaine de la transmission sur réseaux publics et plus particulièrement lorsque ces réseaux utilisent un mode de taxation par paquets. En effet, l'efficacité des techniques de compression de données dépend du type des données traitées. Lorsque ces données sont aléatoires ou déjà comprimées, la compression peut en fait avoir un effet d'expansion des données pouvant atteindre dans les pires des cas 10% à 15% en volume. En terme de nombre de paquets ou de nombre de segments de taxation, cette expansion peut être beaucoup plus importante avec, dans le pire des cas, un doublement du nombre de paquets. En outre, pour la plupart des algorithmes de compression, le temps machine dépensé pour la compression des données est d'autant plus important que les données sont peu compressibles. La compression de données peu compressibles entraîne donc un gaspillage considérable de puissance de traitement.

Le brevet américain n°5177480 décrit une solution permettant de limiter la compression de telles données.

Cette solution consiste à utiliser, pour la transmission de données d'un émetteur vers un récepteur, une méthode de compression selon laquelle l'émetteur et le récepteur peuvent commuter entre un mode dit mode de compression et un mode dit mode transparent de la façon suivante. Au départ, l'émetteur et le récepteur fonctionnent en mode transparent. Les données sont transmises en clair, mais chaque extrémité effectue une compression afin de comparer les résultats obtenus pour estimer l'efficacité de la compression. Dans le cas où la comparaison se révèle efficace, l'émetteur et le récepteur commutent chacun vers le mode compression. En mode compression, seul l'émetteur continue à calculer l'efficacité de la compression, et lorsqu'il détecte son inefficacité, il envoie au récepteur, dans le paquet de données, un code de contrôle pour lui indiquer de passer en mode transparent.

Bien que cette méthode puisse dans certains cas apporter satisfaction, elle présente certains inconvénients auxquels l'invention permet de remédier dans la mesure où le flot de données à traiter est relativement homogène.

D'une part cette méthode oblige à réaliser une opération de compression même lorsqu'elle n'est pas utilisée pour la transmission, et ce, lorsque l'on utilise un algorithme de compression adaptatif, aux deux extrémités de la liaison afin que les dictionnaires de compression utilisés par chacune d'elles soient identiques. En conséquence, le temps d'exécution en mode transparent est très élevé, et, le récepteur devant effectuer tantôt une décompression, tantôt une compression, une double organisation de l'accès aux dictionnaires est nécessaire ce qui requiert davantage d'espace mémoire.

D'autre part, cette méthode ne permet pas de garantir une expansion limitée à une valeur faible et précise, en terme de nombre de paquets ou de segments. Dans le pire des cas, il peut y avoir changement de mode de fonctionnement (mode compression ou mode transparent) pratiquement à chaque paquet, et expansion systématique du paquet lorsque l'on est en mode compression, c'est-à-dire génération d'un paquet supplémentaire. Qui plus est, le code de contrôle transmis au récepteur pour lui indiquer le passage au mode transparent peut lui-même engendrer une expansion.

Le but de la présente invention est de remédier à ces inconvénients.

Pour cela, un système de transmission de données selon l'invention et tel que décrit dans le paragraphe introductif est caractérisé en ce que l'émetteur et le récepteur, qui sont synchronisés, comportent:
- des moyens pour évaluer le taux de compression obtenu,
- et des moyens pour commuter du premier vers le second mode de fonctionnement, lorsque la compression n'est plus efficace, pour la transmission et respectivement la réception d'une quantité de données prédéterminée.

L'invention présente l'avantage d'être totalement indépendante du type de compression utilisée.

Dans un mode de réalisation particulièrement avantageux du système de transmission selon l'invention, l'émetteur et le récepteur comportent des moyens pour, dans ledit premier mode de fonctionnement:
- comprimer et respectivement décomprimer une première quantité de données,
- comparer le taux de compression obtenu à un seuil prédéterminé,
- rester dans ce premier mode de fonctionnement s'il lui est supérieur,
- commuter vers ledit second mode de fonctionnement sinon, et dans ledit second mode de fonctionnement:
- transmettre et respectivement recevoir directement une seconde quantité de données sans compression ni décompression,
- puis commuter vers le premier mode de fonctionnement.

Dans la pratique, lorsque les flux de données hétérogènes ne sont pas multiplexés avant leur compression, les baisses de taux de compression sont plus souvent liées à un changement durable du type de données à transmettre qu'à une alternance rapprochée de données compressibles et de données complètement incompressibles. L'invention qui permet de "laisser passer" une certaine quantité de données sans compression, répond donc parfaitement à ce type de problème.

De plus, elle permet, contrairement à la solution de l'art antérieur, de garantir une expansion maximum des données. Si l'on considère par exemple que la première et la seconde quantité de données sont respectivement égales à 4 koctets et à 64 koctets, on obtient dans le pire des cas, pour des paquets de 128 octets, une expansion de 32 segments pendant la transmission de la première quantité de données en mode comprimé. Cela représente une expansion de 3%.

De façon à pouvoir garantir une expansion maximale suffisamment faible, le rapport entre ladite seconde et ladite première quantité de données est avantageusement choisi supérieur à 10.

L'invention concerne également un équipement d'interconnexion de réseaux destiné à être utilisé comme émetteur ou comme récepteur dans un système de transmission tel que décrit ci-dessus, ainsi qu'un procédé de compression de données utilisé par un tel équipement.

D'autres particularités, détails et avantages de la présente invention seront mis en évidence par la description qui va suivre en regards des dessins annexés qui sont donnés à titre d'exemple non limitatif et dans lesquels:
- la figure 1 représente un exemple de système de transmission selon l'invention,
- la figure 2 représente une courbe de convergence du taux de compression en fonction de la quantité de données transmise,
- la figure 3 représente un exemple de système de transmission sur réseaux longue distance, selon l'invention,
- la figure 4 représente un exemple d'équipement d'interconnexion de réseaux selon l'invention,
- la figure 5 représente un organigramme d'un exemple de procédé de compression de données destiné à être utilisé dans un équipement d'interconnexion de réseaux tel que décrit aux figures 3 et 4.

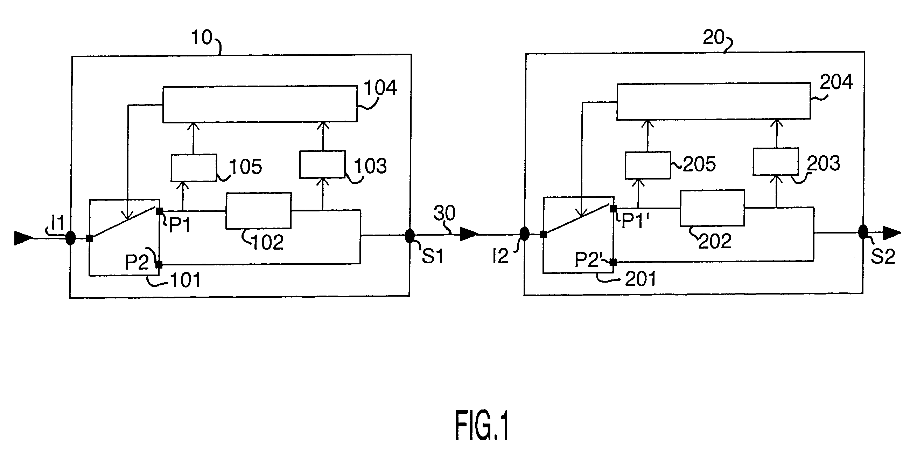

D'après la figure 1, un système de transmission selon l'invention comporte un émetteur 10 et un récepteur 20 qui communiquent par l'intermédiaire d'un canal de transmission 30. L'émetteur 10 comporte lui-même un interrupteur 101.

Dans une première position P1 cet interrupteur 101 est connecté à un codeur 102 qui code les données en utilisant un algorithme de compression de données. Dans cet exemple il s'agit d'un algorithme adaptatif de type "Ziv Lempel" tel que décrit par la recommandation V42 bis du CCITT en ce qui concerne les modems asynchrones; toutefois l'invention est totalement indépendante du type d'algorithme utilisé. La sortie du codeur 102 est reliée à la sortie S1 de l'émetteur 10 d'une part, et à l'entrée d'un compteur 103 qui compte la quantité de données transmises par l'émetteur. La sortie de ce compteur constitue une première entrée d'un comparateur 104. L'autre entrée du comparateur 104 est constituée par la sortie d'un compteur 105 dont l'entrée est connectée à l'entrée I2 du codeur 102 afin de compter la quantité de données qui arrivent à l'entrée de l'émetteur. La sortie du comparateur 104 commande l'interrupteur 101.

Ainsi, en supposant que l'émetteur 10 commence par envoyer une première quantité de donnée d (égale à 4 koctets par exemple) en mode compression, l'interrupteur 101 est dans la position P1. Lorsque le compteur 105 a atteint 4 koctets, le comparateur lit le contenu du compteur 103, et calcule le taux de compression correspondant, puis il remet les compteurs 103 et 105 à zéro. Si le taux de compression ainsi obtenu est inférieur à un seuil Ts prédéterminé (1,2 par exemple), il envoie à l'interrupteur 101 un ordre de commutation vers une seconde position P2. Sinon l'interrupteur reste dans la position P1.

Dans la seconde position P2, la sortie de l'interrupteur 101 est directement reliée à la sortie S1 de l'émetteur 10, de telle sorte que les données sont transmises en clair.

Dans ce cas, lorsque le compteur 103 a atteint une seconde quantité de données D (égale à 64 koctets par exemple), le comparateur 104 envoie à l'interrupteur 101 un ordre de commutation vers la position P1, puis il remet le compteur 103 à zéro.

De même le récepteur 20 comporte un interrupteur 201 disposant d'une première et d'une seconde position P1' et P2'. Dans la première position P1' cet interrupteur 201 est connecté à un décodeur 202 qui décode les données afin de les décomprimer. La sortie du décodeur 202 est reliée à la sortie S2 du récepteur 20 d'une part, et à l'entrée d'un compteur 203 qui compte la quantité de données reçues par le récepteur une fois décomprimées. La sortie de ce compteur constitue une première entrée d'un comparateur 204. L'autre entrée du comparateur 204 est constituée par la sortie d'un compteur 205 dont l'entrée est connectée à la sortie P1' de l'interrupteur 201 afin de compter la quantité de données reçue à l'entrée I2 du récepteur 20. La sortie du comparateur 204 commande l'interrupteur 201.

Lors de la phase de démarrage, l'émetteur et le récepteur négocient les différents paramètres de la communication (première et seconde quantité de données, valeur seuil du taux de compression de données). Puis une première quantité de données d est émise par l'émetteur 10 en mode compression. L'interrupteur 201 doit donc être positionné dans la position P1'. Lorsque le compteur 203 atteint la première quantité de données (4 koctets dans cet exemple), le comparateur 204 lit le contenu du compteur 205, et calcule le taux de compression correspondant, puis il remet les compteurs 203 et 205 à zéro. Si le taux de compression ainsi obtenu est inférieur au seuil Ts, il envoie à l'interrupteur 201 un ordre de commutation vers une seconde position P2'. Sinon l'interrupteur 201 reste dans la position P1'.

Dans la position P2', les données ayant été transmises en clair, la sortie de l'interrupteur 201 est directement reliée à la sortie S2 du récepteur 20.

Dans ce cas, lorsque le compteur 203 a atteint la seconde quantité de données D, le comparateur 204 envoie à l'interrupteur 201 un ordre de commutation vers la position P1', puis il remet le compteur 203 à zéro.

L'émetteur et le récepteur étant synchronisés, et les valeurs des différents paramètres de la communication ayant été négociés lors de son établissement, aucune indication supplémentaire n'a besoin d'être transmise au récepteur pour lui indiquer un changement de mode de fonctionnement.

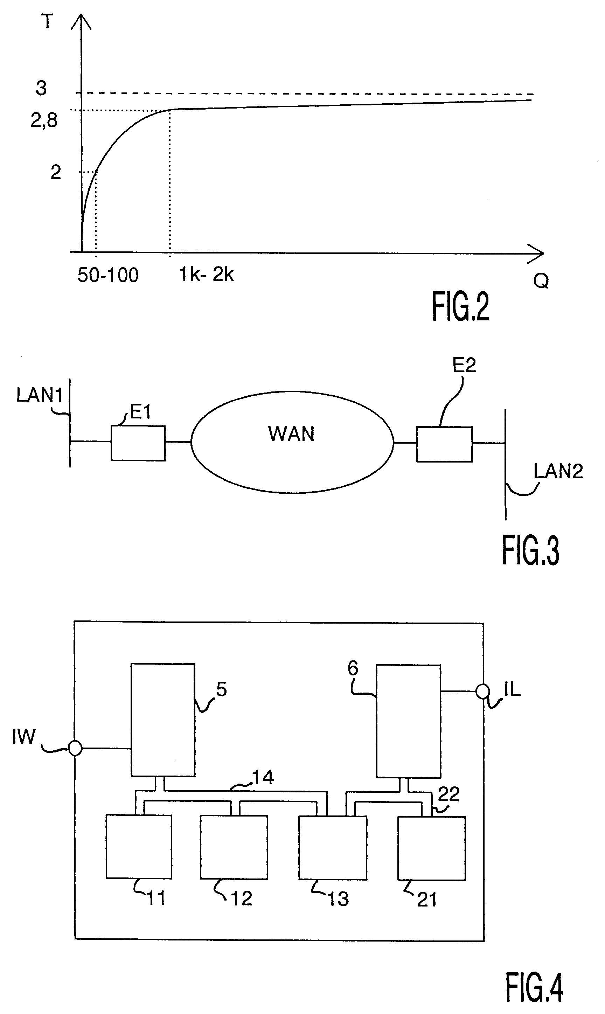

Les valeurs des première et seconde quantité de données d et D, et la valeur du seuil Ts sont choisies par l'utilisateur en fonction de ses besoins et de la nature des données qu'il traite, en se basant par exemple sur une courbe du type de celle de la figure 2 qui donne la convergence du taux de compression T en fonction de la quantité de données Q traitée, pour des données de nature relativement homogène.

D'après la figure 2, on atteint dans ce cas un taux de compression proche de 2 après avoir traité 50 à 100 octets, et un taux de compression proche de 2,8 après avoir traité 1 à 2 koctets, pour un taux de compression maximum proche de 3.

Il est toutefois important de noter que l'expansion maximale des données est d'autant plus faible que le rapport D/d est élevé.

Dans un autre mode de réalisation, les compteurs 103 et 105 de l'émetteur et les compteurs 203 et 205 du récepteur comptent le nombre de segments de taxation correspondants à la quantité de données transmise, au lieu de compter la quantité de données transmise comme cela a été décrit ci-dessus. Le choix entre ces deux modes de fonctionnement fait partie des paramètres qui sont négociés lors de l'établissement de la communication.

La figure 3 donne un autre exemple de système de transmission selon l'invention dans le domaine des transmissions sur réseaux longue distance. Un tel système de transmission comporte deux équipements d'interconnexion de réseaux E1 et E2 jouant alternativement le rôle d'émetteur et de récepteur. Ces deux équipements sont connectés d'une part à un réseau étendu à taxation par paquets, tel que le réseau X25 Transpac par exemple, et d'autre part à des réseaux locaux LAN1 pour l'équipement E1 et LAN2 pour l'équipement E2. Chacun de ces deux équipement dispose donc d'un émetteur et d'un récepteur tel que représenté sur la figure 1.

Dans un mode de réalisation particulièrement simple et donc performant, il est prévu que les comparateurs 104 et 204 des équipements d'interconnexion de réseaux émetteur et récepteur attendent la fin du traitement du paquet courant pour envoyer un ordre de commutation aux interrupteurs 101 et 201. Toutefois, un traitement particulier est prévu pour les paquets appartenant à une séquence entière de paquets telle que définie par la norme X25 (bit M activé pour tous les paquets de la séquence à l'exception du dernier). Les paquets d'une telle séquence forment alors un tout et lorsque les interfaces X25 de l'émetteur et du récepteur utilisent des tailles de paquets différentes, les fins de paquets ne coïncident plus systématiquement au niveau de l'émetteur et au niveau du récepteur. Pour remédier à ce problème, il serait possible d'attendre la fin de la séquence entière pour envoyer l'ordre de commutation. Mais une séquence entière peut être longue; rien n'empêche par exemple un utilisateur de lancer un transfert de fichier incompressible sous forme de séquence entière. Cette solution n'est donc pas acceptable.

Selon l'invention, lorsque le seuil de commutation est atteint au cours d'un paquet d'une séquence entière, le bit M de ce paquet est désactivé de façon à provoquer la fin de la séquence entière, et un indicateur est rajouté pour le signaler (cet indicateur est par exemple constitué par un mot de code réservé de l'algorithme "Ziv Lempel"). Puis l'ordre de commutation est envoyé. Au niveau du récepteur, l'indicateur permet de détecter que la fin de la séquence entière a été provoquée par l'émetteur pour les besoins de la compression. Le comparateur 204 envoie donc l'ordre de commutation, et active à nouveau le bit M de façon à reconstituer la séquence entière d'origine.

La figure 4 décrit de façon plus détaillée un équipement d'interconnexion de réseaux locaux tel que représenté sur la figure 3. Un tel équipement comporte une interface IW vers le réseau longue distance WAN X25 et au moins une interface IL vers les réseaux locaux LAN1 et LAN2 respectivement. L'interface IW vers le réseau longue distance est reliée à un microprocesseur 5 qui est par exemple un 68302 de Motorola. Ce microprocesseur 5 est lui-même relié par un bus 14 à une mémoire 11 dite mémoire de configuration de l'équipement, à une mémoire statique 12 qui contient les instructions de fonctionnement du microprocesseur 5, notamment celles nécessaires à la mise en place de l'invention, et à une mémoire vive 13 contenant des données. L'interface IL vers les réseaux locaux LAN1 et LAN2 est reliée à un processeur de communication 6 formé par exemple (pour des réseaux locaux Ethernet) à partir d'un transmetteur Intel 82503 et d'un processeur Intel 82596DX. Ce processeur de communication 6 est lui-même relié par un bus 22 à une mémoire statique 21 contenant les instructions de fonctionnement du processeur de communication 6, et à la mémoire de données 13 précitée.

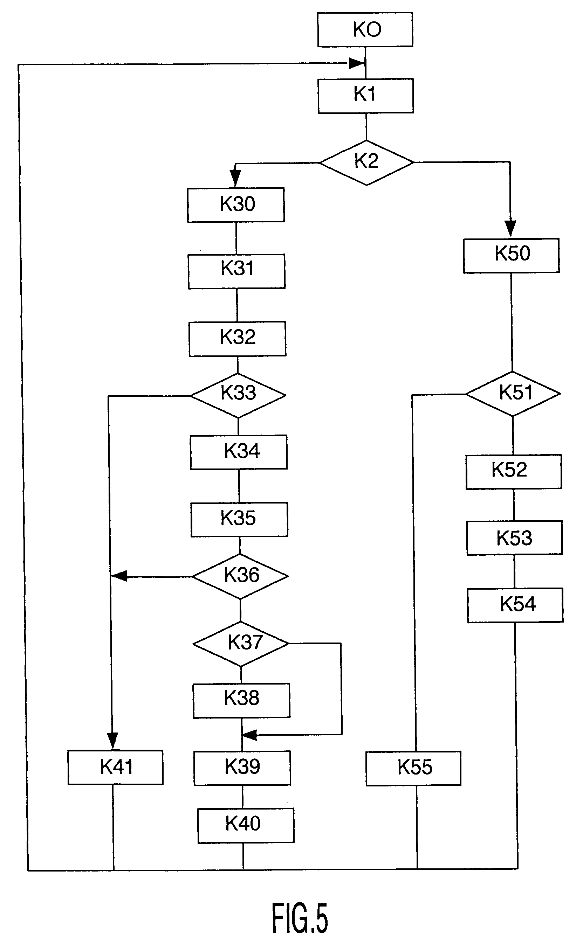

La figure 5 donne un organigramme d'un procédé de compression de données destiné à être utilisé dans un équipement d'interconnexion de réseaux tel que décrit sur les figures 3 et 4. De façon à regrouper dans cet organigramme le cas où l'équipement fonctionne en émetteur et celui où il fonctionne en récepteur, les compteur 105 et 205 seront regroupés sous la désignation C5, et les compteurs 103 et 203 sous la désignation C3.

La signification des différentes cases de cet organigramme, lorsque cet équipement fonctionne en émetteur, est donnée ci-dessous:
- case KO: Le mode de fonctionnement initial de l'équipement est le mode "Compression".
- case K1: Le procédé est en attente de réception d'un paquet sur l'entrée d'émission ou de réception de l'équipement. Dès qu'un paquet est reçu, il passe à la case K2.
- case K2: test du mode de fonctionnement de l'équipement. S'il s'agit du mode "Compression", le procédé passe à la case K30, sinon il passe à la case K50.
- case K30: mise à jour du compteur C5 en lui ajoutant la quantité de données contenue dans le paquet courant.
- case K31: compression du paquet de données courant.
- case K32 : mise à jour du compteur C3 en lui ajoutant la quantité de données résultant de cette compression.
- case K33: test sur la valeur du compteur C5. Si elle est supérieure à la première quantité de données d, le procédé passe à le case K34, sinon il passe à la case K41.
- case K34: calcul du taux de compression à partir des valeurs des compteurs C3 et C5.
- case K35: remise à zéro des compteurs C3 et C5.
- case K36: comparaison du taux de compression obtenu au seuil Ts. S'il lui est supérieur le procédé passe à la case K41, sinon il passe à la case K37.
- case K37: test sur la valeur du bit M (défini dans la norme X25 du CCITT) du paquet courant. S'il est égal à 1, le procédé continu à la case K38, sinon il passe à la case K39.
- case K38: mise à zéro du bit M, et ajout à la fin du paquet comprimé du mot de code réservé de l'algorithme "Ziv Lempel" qui indique que la fin de la séquence entière a été provoquée. Puis le procédé continu à la case K39.
- case K39: émission du paquet avec adaptation éventuelle du paquet à la taille applicable à l'interface.
- case K40: passage au mode de fonctionnement "Debrayage" de l'équipement. Puis le procédé recommence à la case K1.
- case K41: émission du paquet avec adaptation éventuelle du paquet à la taille applicable à l'interface. Puis le procédé recommence à la case K1.
- case K50: le compteur C3 est mis à jour en lui ajoutant la quantité de données contenue dans le paquet de données courant.
- case K51: test sur la valeur du compteur C3 et du bit M. Si le compteur C3 est inférieur à la seconde quantité de données ou si le bit M est égal à 1, le procédé passe à la case K55. Sinon, il continue à la case K52.
- case K52: émission du paquet. Puis passage à la case K53.
- case K53: passage au mode de fonctionnement "Compression".
- case K54: remise à zéro des compteurs C3 et C5 puis le procédé recommence à la case K1.
- case K55: émission du paquet. Puis le procédé recommence à la case K1.

Lorsque l'équipement fonctionne en récepteur, certaines cases de cet organigramme ont une signification différentes qui est explicitée ci-dessous:
- case K31: mémorisation de l'éventuel mot de code réservé indiquant une fin de séquence provoquée puis décompression du paquet de données courant.
- case K32 : mise à jour du compteur C3 en lui ajoutant la quantité de données résultant de cette décompression.
- case K33: test sur la valeur du compteur C3 et du bit M. Si le compteur C3 est supérieur à la première quantité de données d, et si le bit M a une valeur nulle, le procédé continue à la case K34. Sinon, il passe à la case K41.
- case K37: si le mot de code réservé indiquant une fin de séquence provoquée est présent, le procédé continu à la case K38, sinon il passe à la case K39.
- case K38: mise à 1 du bit M puis passage à la case K39.

Il va de soi que des modifications peuvent être apportées aux modes de réalisation qui viennent d'être décrits, notamment par substitution de moyens techniques équivalents sans que l'on sorte pour cela du domaine de la présente invention.

## Revendications

1. Système de transmission de données comprenant au moins un émetteur (10) et un récepteur (20) qui comportent chacun des moyens pour commuter entre un premier mode de fonctionnement selon lequel les données transmises ou reçues sont codées ou décodées de façon à les comprimer ou à les décomprimer, et un second mode de fonctionnement selon lequel les données sont transmises ou reçues directement sans codage ou décodage, caractérisé en ce que, l'émetteur (10) et le récepteur (20), qui sont synchronisés, comportent:
- des moyens (103, 104, 105 et 203, 204, 205) pour évaluer le taux de compression obtenu,
- et des moyens (101, 104 et 201, 204) pour commuter du premier vers le second mode de fonctionnement, lorsque la compression n'est plus efficace, pour la transmission et respectivement la réception d'une quantité de données prédéterminée.

2. Système de transmission de données selon la revendication 1, caractérisé en ce que, l'émetteur (10) et respectivement le récepteur (20) comportent des moyens pour, dans ledit premier mode de fonctionnement:
- comprimer et respectivement à décomprimer une première quantité (d) de données,
- comparer le taux de compression obtenu à un seuil prédéterminé,
- rester dans ce premier mode de fonctionnement s'il lui est supérieur,
- commuter vers ledit second mode de fonctionnement sinon, et dans ledit second mode de fonctionnement:
- transmettre et respectivement recevoir directement une seconde quantité (D) de données sans compression ni décompression,
- puis commuter vers le premier mode de fonctionnement.

3. Système de transmission de données selon la revendication 2, caractérisé en ce que le rapport entre ladite seconde et ladite première quantité de données est supérieur à 10.

4. Equipement d'interconnexion de réseaux (E1, E2) destiné à échanger des données en émission ou en réception avec un équipement d'interconnexion de réseaux distant, et qui comporte des moyens pour commuter entre un premier mode de fonctionnement selon lequel les données qu'il transmet ou reçoit sont codées ou décodées de façon à les comprimer ou à les décomprimer, et un second mode de fonctionnement selon lequel il transmet ou reçoit directement les données sans codage ou décodage, caractérisé en ce qu'il comporte des moyens pour commuter du premier vers le second mode de fonctionnement, lorsque la compression n'est plus efficace, pour la transmission ou respectivement la réception d'une quantité de données prédéterminée.

5. Equipement d'interconnexion de réseaux (E1, E2) selon la revendication 4, caractérisé en ce qu'il comporte des moyens pour, dans ledit premier mode de fonctionnement,
- comprimer une première quantité de données (d) à transmettre, ou décomprimer une première quantité (d) de données reçues,
- comparer le taux de compression obtenu à un seuil prédéterminé,
- rester dans ce premier mode de fonctionnement s'il lui est supérieur,
- commuter vers ledit second mode de fonctionnement sinon, et dans ledit second mode de fonctionnement:
- transmettre ou recevoir directement une seconde quantité (D) de données sans compression ni décompression,
- puis commuter vers le premier mode de fonctionnement.

6. Procédé de compression de données transmises entre un émetteur (10) et un récepteur (20) qui comportent chacun des moyens pour commuter entre un premier mode de fonctionnement selon lequel les données transmises ou reçues sont codées ou décodées de façon à les comprimer ou à les décomprimer, et un second mode de fonctionnement selon lequel les données sont transmises ou reçues directement sans codage ou décodage, caractérisé en ce que, pour l'émetteur et respectivement pour le récepteur, ledit premier mode de fonctionnement consiste à:
- comprimer et respectivement à décomprimer une première quantité (d) de données,
- comparer le taux de compression obtenu à un seuil prédéterminé,
- rester dans ce premier mode de fonctionnement s'il lui est supérieur,
- commuter vers ledit second mode de fonctionnement sinon,
et ledit second mode de fonctionnement consiste à:
- transmettre et respectivement recevoir directement une seconde quantité (D) de données sans compression ni décompression,
- puis commuter vers le premier mode de fonctionnement.
